(19) **Europäisches Patentamt / European Patent Office / Office européen des brevets**

(11) **EP 1 621 025 B1**

(12) **FASCICULE DE BREVET EUROPEEN**

(45) Date de publication et mention
de la délivrance du brevet:
**31.05.2017 Bulletin 2017/22**

(21) Numéro de dépôt: **04742543.4**

(22) Date de dépôt: **20.04.2004**

(51) Int Cl.:
***H04N 17/04*** *(2006.01)*

(86) Numéro de dépôt international:
**PCT/FR2004/000965**

(87) Numéro de publication internationale:
**WO 2004/098206 (11.11.2004 Gazette 2004/46)**

(54) **DISPOSITIF D'ECRAN PLAT ET SYSTEME DE REGLAGE POUR UN TEL DISPOSITIF**

FLACHSCHIRMVORRICHTUNG UND SYSTEM FÜR SEINE EINSTELLUNG

FLAT SCREEN DEVICE AND SYSTEM FOR THE ADJUSTMENT THEREOF

(84) Etats contractants désignés:
**AT BE BG CH CY CZ DE DK EE ES FI FR GB GR
HU IE IT LI LU MC NL PL PT RO SE SI SK TR**

(30) Priorité: **25.04.2003 FR 0305120**

(43) Date de publication de la demande:
**01.02.2006 Bulletin 2006/05**

(73) Titulaire: **JOHNSON CONTROLS AUTOMOTIVE
ELECTRONICS
95526 Cergy Pontoise Cédex (FR)**

(72) Inventeurs:
• **Lehomme, Francis
95450 AVERNES (FR)**
• **DOMMANGET, Thierry
F-78770 Auteuil-Le-Roi (FR)**

(74) Mandataire: **Gevers & Orès
9 rue St Antoine du T
31000 Toulouse (FR)**

(56) Documents cités:
**WO-A-02/47397 US-A- 5 369 432
US-A- 5 650 844 US-A- 5 764 209
US-A1- 2003 052 904**

## Description

L'invention concerne les dispositifs de visualisation à écran plat constitués d'un réseau de transistors et également les systèmes de réglage en usine de la visualisation des images vidéo sur ces dispositifs.

Les dispositifs à écran plat sont maintenant de plus en plus utilisés dans les véhicules automobiles pour afficher non seulement les indications sur la conduite du véhicule, mais aussi des informations plus élaborées, par exemple du type carte routière, films, nécessitant une bonne qualité d'affichage des images vidéo.

Pour leur réalisation, on a recours à des technologies dites à film mince, connue sous le sigle TFT, « thin film technology » ou encore, les écrans étant constitués d'un réseau de transistors « TFT », « thin film transistor ».

Les écrans TFT sont contrôlés et commandés par des circuits électroniques de contrôle qui élaborent et transmettent des signaux vidéo d'images à visualiser, sous une forme convenable et compte tenu de paramètres modifiant la qualité de visualisation, notamment pour compenser les tolérances de fabrication. Ces paramètres sont par exemple : la luminosité, le contraste, le scintillement, etc .... C'est un réglage en usine, ou préréglage, qui permet d'en fixer les valeurs initiales.

Actuellement, la plupart des moyens de préréglage de dispositifs à écran plat de visualisation comportent un générateur de mires pour afficher des images permettant de mettre en évidence les défauts consécutifs au mauvais réglage des paramètres ci-dessus. La visualisation des mires générées sur l'écran permet de régler manuellement la valeur de ces paramètres par des potentiomètres prévus dans les circuits électroniques de contrôle.

Ces opérations manuelles présentent le triple inconvénient d'être longues, coûteuses, et une cause de mauvaise homogénéité des dispositifs en sortie d'usine. En outre, les paramètres ainsi réglés ne sont pas constants dans le temps.

La demanderesse a cherché à résoudre ce problème, sachant que l'état de la technique le plus proche est décrit dans le brevet US 5369432 et tel que défini dans le préambule de la revendication 1. A cet effet, l'invention, telle que revendiquée, concerne un système de préréglage des paramètres de réglage d'images vidéo d'un dispositif à écran plat de visualisation d'images constitué d'un écran et de circuits électroniques de contrôle lui transmettant des signaux vidéo, et comportant un générateur de mires, caractérisé par le fait qu'il comporte en outre des moyens d'acquisition pour acquérir les signaux vidéo, des moyens de calcul des valeurs des paramètres de réglage et des moyens de réglage agencés pour mémoriser les valeurs des paramètres de réglage dans les circuits électroniques de contrôle.

En fonction de la mire envoyée au dispositif à écran plat, et des signaux vidéo reçus par l'écran, les moyens de calcul calculent de nouvelles valeurs des paramètres et les moyens de réglage remplacent les anciennes valeurs des paramètres dans les circuits électroniques de contrôle par ces nouvelles valeurs. Le calcul est répété tant que les valeurs des paramètres de réglage ne sont pas satisfaisantes.

De préférence, les circuits électroniques de contrôle comportent un circuit de restitution des paramètres agencés pour mémoriser numériquement lesdites valeurs des paramètres calculés.

Les préréglages manuels en usine ne sont plus nécessaires.

De préférence encore, les moyens de réglage comprennent un simulateur dudit circuit de restitution.

Pendant la répétition des calculs et tant que les valeurs des paramètres ne sont pas définitives, c'est-à-dire tant que le réglage n'est pas terminé, on n'a pas besoin de modifier le circuit de restitution du dispositif à écran plat, ce qui permet une grande liberté dans le choix de sa technologie.

Avantageusement, le circuit de restitution des paramètres comprend un circuit logique programmable et le simulateur comprend au moins un circuit logique programmable émulant le circuit logique programmable du circuit de restitution.

En particulier, les deux circuits logiques programmables ci-dessus sont du même type ce qui simplifie le système. En outre, le simulateur est de préférence constitué par l'émulateur seul.

De préférence toujours, les moyens de réglage comportent un module d'écriture dans le circuit logique programmable du circuit de restitution pour effectuer des modifications de certains circuits électriques parmi des circuits électriques prédéterminés dudit circuit logique programmable.

Conformément à une autre caractéristique, les moyens de calcul comportent une fonction de programmation agencée pour mettre en service le simulateur sur les circuits électroniques de contrôle et mettre hors service le circuit de restitution pendant le réglage des paramètres.

Ou bien, ladite fonction de programmation met en service le circuit logique programmable du simulateur sur les circuits électroniques de contrôle et met hors service le circuit logique programmable du circuit de restitution pendant le réglage des valeurs des paramètres.

Avantageusement dans les deux cas, le circuit logique programmable du simulateur ou le simulateur et les circuits électroniques de contrôle sont connectés entre eux par l'intermédiaire d'une interface du type lit à clous, facile à mettre en oeuvre.

Conformément à une autre caractéristique, les moyens de calcul (50) sont agencés pour commander le générateur de mires.

Conformément à une autre caractéristique, le système comporte des moyens de mesure optique reliés aux moyens de calcul pour le réglage du paramètre de scintillement.

L'invention concerne également un dispositif à écran plat de visualisation d'images comportant un écran et des circuits électroniques de contrôle d'écran lui délivrant des signaux vidéo et dépendant de paramètres de réglage, caractérisé par le fait que les circuits électroniques de contrôle comportent au moins un circuit logique programmable agencé pour générer des tensions électriques représentatives des valeurs des paramètres de réglage.

De préférence, les tensions électriques représentatives des valeurs des paramètres de réglage sont générées à partir de signaux de modulations d'impulsions en largeur (MIL, ou en anglo-saxon PWM, c'est-à-dire « pulse width modulation») et les modulations obtenues sont transformées en tension continue par des filtres, par exemple des filtres du premier ordre.

De préférence, ce sont les rapports cycliques des modulations d'impulsions en largeur qui sont représentatifs des valeurs des paramètres de réglage.

Avantageusement, les rapports cycliques des modulations d'impulsions en largeur sont mémorisés dans le circuit logique programmable du circuit de restitution. En particulier, les rapports cycliques des modulations d'impulsions en largeur sont mémorisés par la modification de certains circuits électriques parmi des circuits électriques prédéterminés dudit circuit logique programmable.

Les paramètres sont ainsi mémorisés en dur dans le circuit.

De préférence, les modifications des circuits électriques sont réalisées sur les entrées SET ou RESET successives de circuits bascules, et le circuit logique programmable du circuit de restitution est un EPLD (« erasable programmable logic device » ou circuit logique programmable et effaçable) ou un CPLD (« complex programmable logic device » ou puce logique programmable).

L'invention sera mieux comprise à l'aide de la description suivante et des dessins annexés sur lesquels :

- la figure 1 est un schéma par blocs fonctionnels d'un dispositif à écran plat du type TFT et la mise en oeuvre d'un système de l'art antérieur pour le préréglage en usine du dispositif ;
- la figure 2 est un schéma par blocs fonctionnels d'une forme de réalisation préférée, selon l'invention, du système de préréglage de dispositif à écran plat, en connexion à un mode de réalisation préféré, selon l'invention, du dispositif à écran plat ;
- la figure 3 montre un schéma par blocs fonctionnels du circuit de restitution des paramètres de réglage, en connexion, lors d'un préréglage, aux moyens de réglage ; et
- la figure 4 représente un organigramme du déroulement des étapes de préréglage du dispositif à écran plat par le système de préréglage selon l'invention.

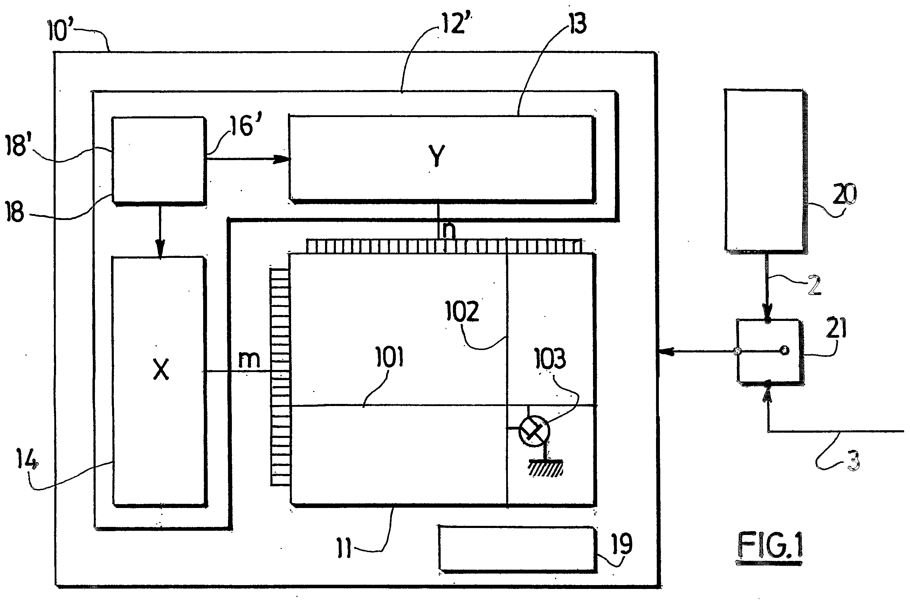

En référence à la figure 1, un dispositif de visualisation 10, à écran plat 11, ici de technologie TFT, comporte, outre l'écran, un circuit électronique 12 de contrôle des circuits 13 et 14 de génération de m et n signaux d'entrées lignes X et colonnes Y de l'écran, synchronisés par des signaux de synchronisation ligne SL et de synchronisation trame ST.

Chacune 101 de ces entrées X, ou 102 de ces entrées Y, est reliée à n, ou m, transistors TFT 103, et l'ensemble constitue un réseau matriciel de transistors réalisant chacun un pixel de couleur de l'écran.

Le circuit électronique de contrôle 12 comporte également un circuit 18 ou 18' de restitution de paramètres de réglage, en général au moins huit, tels que la luminosité, le contraste, le scintillement, etc ... . Ce circuit agit sur les circuits de génération 13 et 14 pour qu'ils les prennent en compte.

Enfin il est prévu un circuit 19 de servitudes, comprenant notamment une horloge.

Dans les dispositifs de l'art antérieur, le circuit 18' comporte autant de potentiomètres qu'il y a de paramètres, et on règle la position des curseurs de ces potentiomètres à la main, un par un, en réaction à l'affichage d'une image mire, correspondant au paramètre à régler, envoyée par un générateur de mires 20 dont on connecte la sortie 2 au dispositif 10, par exemple par un commutateur 21, en substitution à une entrée 3 de signaux d'images vidéo envoyés quand le dispositif est normalement utilisé.

Conformément à l'invention, on remplace le circuit à potentiomètres 18' par un circuit 18 aux fonctions analogues de restitution des paramètres mais sans potentiomètres.

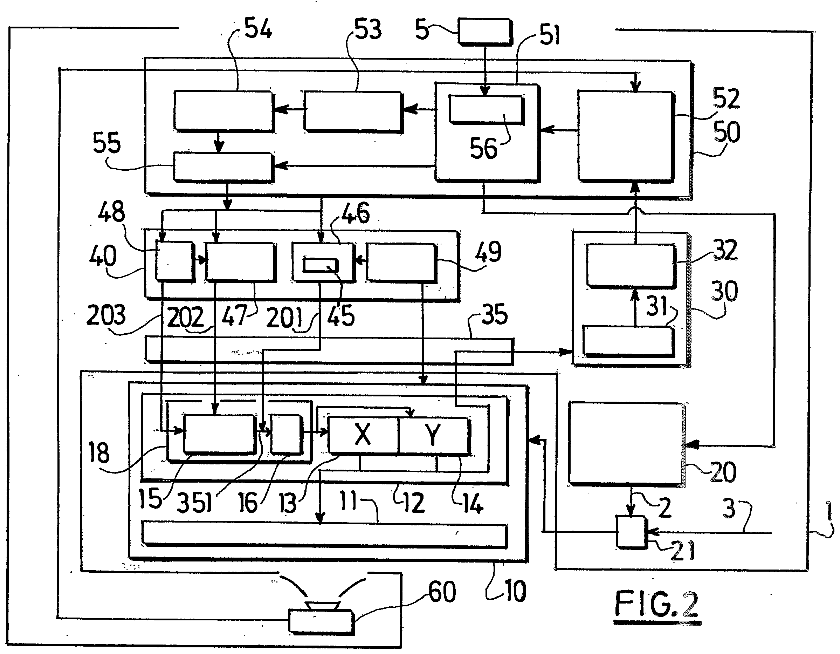

La figure 2 illustre schématiquement le système de préréglage selon l'invention.

Ce circuit 18 de restitution des paramètres du dispositif à écran plat 10 comprend, en référence à la figure 2, un circuit 15 logique programmable et en sortie de ce dernier un bloc de filtrage 16 qui délivre, sous forme de tensions continues identiques aux tensions délivrées par le circuit 18', les valeurs des paramètres de réglage aux circuits d'entrées 13 et 14 du circuit électronique de contrôle 12.

Le circuit logique programmable 15 peut être un EPLD ou un CPLD. Il est programmé à l'issue du réglage, le programme contenant les valeurs des paramètres.

Toujours en référence à la figure 2, le système de préréglage 1 comporte le générateur de mires 20 déjà vu plus haut.

Il comporte, en plus, des moyens 30 d'acquisition des signaux d'entrées X et Y, essentiellement des convertisseurs 31 analogiques - numériques synchronisés sur les signaux de synchronisation SL et ST du circuit 12 et des mémoires 32 de stockage des données numériques acquises, reliés à des moyens 50 de calcul, ici un PC (« personal computer » ou ordinateur personnel), par une liaison IEE488.

Le système de préréglage 1 comporte aussi des moyens 40 de réglage expliqués ci-après, reliés d'une part aux moyens de calcul par une liaison série du type RS232 et d'autre part directement aux pistes des circuits de contrôle 12 du dispositif à écran plat 10 grâce à une interface 35 du type lit à clous (« nail-bed » selon la terminologie anglo-saxonne). Cette interface 35 permet en outre la liaison directe des circuits 13 et 14 d'entrées X et Y et des moyens d'acquisition 30.

Le PC 50 est aussi relié au générateur de mires 20, ici agencé pour en recevoir une commande de sélection de mires, et à des moyens de mesure optique, ici une caméra 60 disposée en regard de l'écran 11.

Plus précisément, le PC 50 comporte un superviseur 51 contenant une interface homme-machine 56 reliée à un clavier 5 de contrôle du PC, une fonction 52 d'acquisition, une fonction 53 de calcul pour calculer des nouvelles valeurs de paramètres en fonction des données transmises par la fonction d'acquisition 52, une mémoire 54 de résultats de calculs, et une fonction 55 de programmation utilisant les résultats de calculs pour générer des programmes et des commandes de réglage à exécuter par le module de réglage 40.

Le module de réglage 40 est un boîtier électronique qui comporte :

- des moyens 49 de servitude tels que des alimentations électriques, des horloges, ... dont une horloge de cadencement de l'ensemble des circuits électroniques, par exemple de 8 Mhz, pour assurer le fonctionnement du module de réglage et aussi pouvant suppléer à une mise hors fonction du circuit 19 du dispositif 10,
- un programmateur 48 de circuit logique programmable, EPLD ou CPLD,
- un module 47 d'écriture du type écriture mémoire morte altérable électriquement EAPROM (« electrically alterable programmable read only memory »),
- un simulateur 46 du circuit de restitution 18, qui reçoit également les alimentations et horloges des moyens de servitudes 49 pour le synchroniser avec lui. De préférence, il est constitué d'un circuit logique programmable 45, EPLD ou CPLD, émulateur du circuit logique programmable 15, lui-même EPLD ou CPLD.

Les circuits 15 et 45 sont du même type. Emuler l'un par l'autre est ainsi plus simple.

Cependant le circuit 45 peut être de capacité non limitée, alors que le circuit 15, situé dans le dispositif à écran plat, doit être de capacité minimale pour des raisons de coût de fabrication industrielle.

Ainsi, il n'y a aucune difficulté à programmer le circuit 45, notamment par le programmateur 48.

Le circuit logique programmable 15 est agencé, lui, pour être programmé de deux façons : une façon classique par le programmateur 48, et une autre complémentaire, par altération de circuit, par le module d'écriture 47.

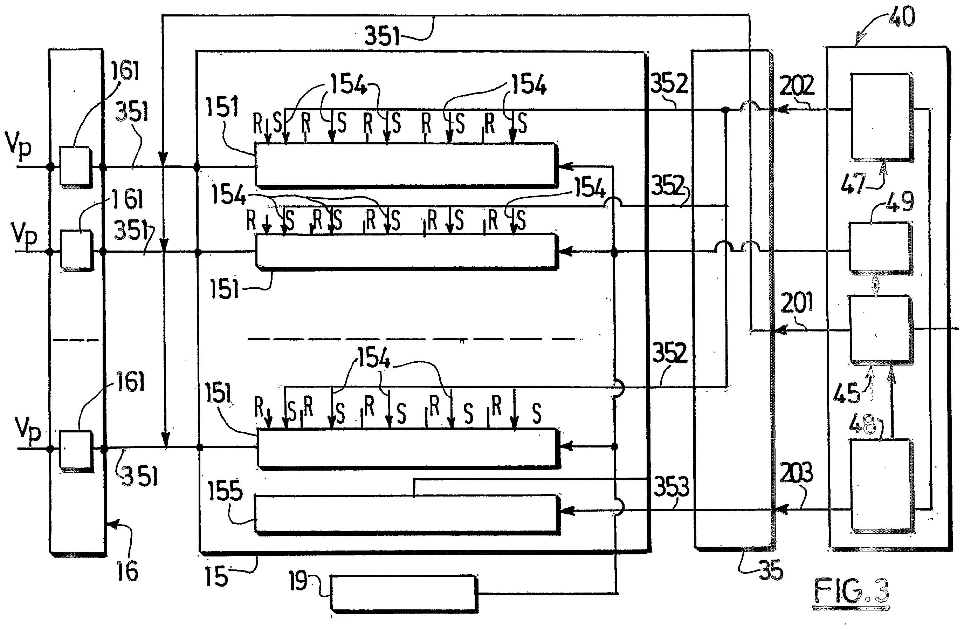

A cet effet, en référence à la figure 3, le circuit logique programmable 15, étant un EPLD ou un CPLD, comporte des circuits du type bascules 151. Chaque paramètre est affecté à l'un de ces circuits bascules 151 comportant au moins quatre étages consécutifs. Ces étages sont du type bascules RS (« SET-RESET flip-flop »). Le module d'écriture 47 peut, par altération électrique du circuit des entrées R ou S de chaque étage et grâce aux liaisons 202 et 352 entre le module 47 et le circuit 15, modifier les polarités 154 de ces entrées R ou S, par exemple changer leur niveau logique « 1 » en niveau logique « 0 » et ainsi afficher une grandeur binaire de quatre bits, d'une dynamique de $2^4$, pour un circuit bascule 151, en relation avec la valeur du paramètre affecté à ce circuit. La sortie dudit circuit bascule est un signal de modulation d'impulsions en largeur (MIL ou PWM) appliqué à un filtre du premier ordre 161, associé au même paramètre, du bloc de filtrage 16. La sortie de chaque filtre associé à chaque paramètre est une tension Vp représentative de la valeur dudit paramètre.

Complémentairement, le circuit logique programmable 15, étant un EPLD ou un CPLD, comporte un programme 155 chargé par le programmateur 48 à travers la liaison 203 depuis les moyens de réglage 40 et 353 avec l'interface 35. Le programme 155 contrôle l'utilisation ou non des signaux d'horloges du circuit de servitude 19, c'est-à-dire la mise en ou hors service du circuit 15.

Enfin des liaisons 201 court-circuitent les sorties 351 du circuit 15 et relient directement les sorties du circuit 45 aux entrées du bloc de filtrage 16, quand le lit à clous 35 est en place et que le circuit 15 a été mis hors service.

Les liaisons 201, 202, 203 sont filaires entre les moyens de réglage 40 et l'interface 35, alors que, entre l'interface 35 et le circuit logique programmable 15, leurs prolongements 351, 352, 353 sont réalisés par l'apposition des clous du lit à clous directement sur les pistes du circuit 15.

Quand le lit à clous est en place, les moyens de servitude 49 suppléent à la mise hors service du circuit 15 et aussi du circuit de servitude 19.

Le fonctionnement du dispositif à écran plat 10 et plus particulièrement celui du circuit 18 de restitution d'un paramètre P va maintenant être expliqué.

Pour cadencer les circuits électroniques dans leur ensemble, un compteur du circuit de servitude 19 ou des moyens de servitudes 49, suivant que l'on est en utilisation normale ou en phase de préréglage, délivre des signaux de comptage dont la valeur V varie de 0 à l'amplitude $2^5 - 1$ modulo $2^5$, sur une certaine période T de comptage, appliqués aux 5 entrées d'un circuit bascule RS 151 à cinq entrées, affecté à ce paramètre P.

En réponse à ces signaux de comptage, le circuit bascule 151 délivre un signal de sortie changeant d'état, du niveau logique 0 au niveau logique 1 quand la valeur V est égale à 0 et dans le sens inverse quand elle est égale à une valeur affichée sur les entrées SET dudit circuit bascule au moyen d'une polarité prédéterminée, à un instant $t_0$ dans la période T de remise à zéro de ladite valeur V.

Pour la mémorisation en dur du paramètre, on fixe la polarité de certaines des entrées SET 1, 2, 3, 4, 5 du circuit bascule dudit paramètre par altération, par action du module 47, des circuits électriques du circuit électronique programmable 15. Les entrées SET correspondantes sont polarisées à des niveaux logiques « 1 » au lieu du niveau logique « 0 ». On mémorise ainsi en dur une valeur correspondant à l'instant to souhaité dans la période T pour déterminer un rapport cyclique RC tel que défini ci après : le signal de sortie du circuit 151 est inversé en to pour donner un signal de modulation d'impulsion en largeur to et de fréquence 1/T. Le rapport cyclique RC de cette modulation d'impulsion en largeur est :

$$RC = t_0 / T$$

Le signal MIL (ou PWM) est filtré dans le filtre 161 intégrateur du bloc de filtrage 16 pour donner une tension Vp proportionnelle à RC qui est transmise aux circuits d'entrées X et Y, 13 et 14, à la place de la tension du potentiomètre de l'état de l'art.

Le circuit logique programmable 45 peut fonctionner de la même manière que le circuit 15 et peut ainsi l'émuler, même si la mémorisation des entrées SET peut alors être effectuée dans des registres d'un EPLD ou un CPLD plus puissant, au fur et à mesure du réglage.

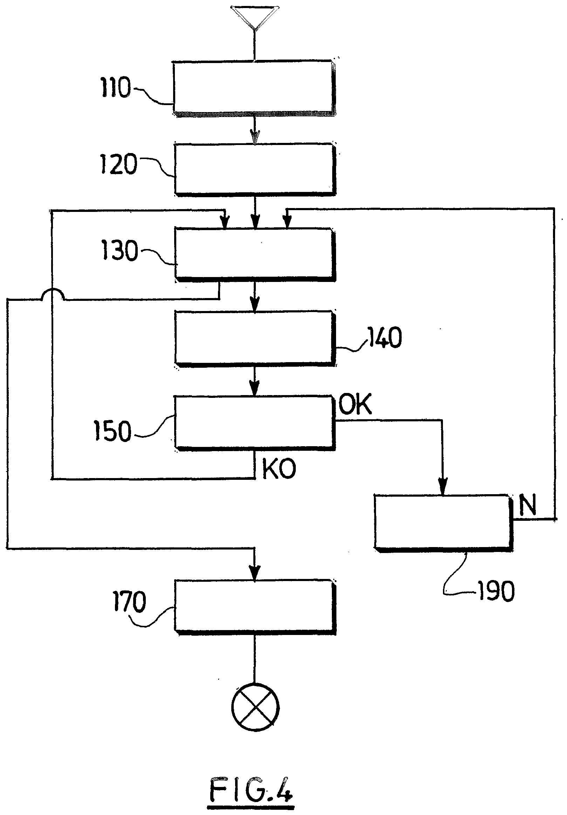

Pour mettre en service cette émulation, c'est-à-dire plus généralement pour effectuer un préréglage du dispositif à écran plat 10, en référence à la figure 4 et à la figure 2, à une étape 110, on met en place le lit à clous 35, on acquiert par le clavier 5 les spécifications du réglage à effectuer, par exemple des valeurs nominales des paramètres de préréglage, qui sont mémorisées dans la mémoire de l'interface 56 et on lance le superviseur 51.

Ce dernier provoque, lors d'une étape 120, l'élaboration des programmes, par la fonction de programmation 55, et la programmation, par le programmateur 48, des circuits logiques programmables 45 et 15, notamment de son programme 155 mettant hors service le circuit 15.

Lors de l'étape 130 suivante, le superviseur commande au générateur de mires 20 l'envoi d'une mire sur l'écran 11 du dispositif 10, correspondant au premier paramètre à régler, ou commande une mire complémentaire pour le paramètre en cours.

Les étapes 140 à 150 suivantes sont ensuite répétées itérativement jusqu'à obtention d'un résultat convenable défini ci-après.

Lors de l'étape 140, le superviseur, après un temps d'établissement de l'image, formée grâce aux circuits 13 et 14 et plus en amont grâce au circuit 45 programmé avec des valeurs initiales des paramètres, le circuit 15 étant mis hors service, active les moyens d'acquisition 30 pour acquérir pendant un temps déterminé à l'avance les signaux X et Y par le canal du lit à clous 35, les convertir par les convertisseurs 31 et les mémoriser dans la mémoire 32.

Le superviseur lance ensuite, lors de l'étape 150, les calculs de correction du paramètre en cours, exécutés par les moyens de calcul 53 à partir des données dans la mémoire 32, stockées dans une mémoire de la fonction d'acquisition 52 et des spécifications. S'il s'agit d'un paramètre demandant l'utilisation de la caméra 60 ou autres moyens de mesure optique, la mémoire de la fonction 52 reçoit alors ses données de cette caméra ou de ces moyens de mesure optiques par une liaison IEEE 488.

Si les spécifications sont vérifiées, c'est-à-dire si la correction trouvée est nulle ou inférieure à un seuil minimum, on passe à une étape d'écriture 190 dans laquelle la valeur du paramètre est traduite en valeur de rapport cyclique RC, puis en nombre binaire à écrire sur les entrées SET 154 du circuit bascule 151 auquel le paramètre a été affecté, et le nombre binaire est écrit en dur dans le circuit 15 par le module d'écriture 47, puis on réitère l'étape 130 pour un nouveau paramètre à régler.

Si une correction est encore à faire, on passe à nouveau à l'étape 130 pour utiliser une autre mire complémentaire pour traiter ce paramètre.

Quand, à l'étape 130 on détecte que toutes les mires ont été utilisées, ou que tous les paramètres ont été traités, et écrits dans le circuit 15, on passe à une étape 170 dans laquelle le superviseur, par la fonction de programmation 55, commande la programmation, par le programmateur 48, d'un programme 155 du circuit logique programmable 15, puis le retrait du lit à clous 35. Ledit programme 155 ne relance les servitudes 19 que lorsque le lit à clous est retiré.

**Revendications**

1. Système (1) de préréglage de paramètres de réglage d'images vidéo d'un dispositif (10) à écran plat de visualisation d'images constitué d'un écran (11) et de circuits (12) électroniques de contrôle lui transmettant des signaux d'entrées lignes X et colonnes Y, et comportant un générateur de mires (20), comportant en outre des moyens (30) d'acquisition pour acquérir les signaux d'entrées X et Y, des moyens (50) de calcul des valeurs des paramètres de réglage et des moyens (40) de réglage pour mémoriser lesdites valeurs des paramètres de réglage dans les circuits électroniques de contrôle, lesdits circuits électroniques de contrôle (12) comportant un circuit (18) de restitution des paramètres de réglage agencé pour mémoriser numériquement les valeurs des paramètres calculés, **caractérisé en ce que** les moyens de réglage (40) comprennent un simulateur (46) dudit circuit de restitution (18).

2.  Système selon la revendication 1 dans lequel les moyens de calcul comportent un superviseur (51) agencé pour répéter les calculs tant que les valeurs des paramètres de réglage ne sont pas satisfaisantes.

3.  Système selon l'une des revendications 1 et 2 dans lequel le circuit de restitution (18) des paramètres comprenant un circuit (15) logique programmable, le simulateur (46) comprend au moins un circuit (45) logique programmable émulant le circuit logique programmable (15).

4.  Système selon la revendication 3 dans lequel les circuits logiques programmables (15) et (45) sont du même type.

5.  Système selon l'une des revendications 1 à 4 dans lequel le simulateur (46) est constitué par l'émulateur (45) seul.

6.  Système selon l'une des revendications 3 et 5 dans lequel les moyens de réglage (40) comportent un module (47) d'écriture dans le circuit logique programmable (15) pour effectuer des modifications de certains circuits électriques parmi des circuits électriques prédéterminés du circuit logique programmable (15) par lesquelles lesdites valeurs des paramètres calculés sont mémorisées.

7.  Système selon l'une des revendications 3 et 4 et 6 dans lequel les circuits logiques programmables sont du type EPLD ou CPLD.

8.  Système selon l'une des revendications 1 à 7 dans lequel les moyens de calcul comportent une fonction (55) de programmation pour mettre en service le simulateur (46) sur les circuits électroniques de contrôle (12) et mettre hors service le circuit de restitution (18) pendant le réglage des paramètres.

9.  Système selon l'une des revendications 1 à 8 dans lequel les moyens de calcul comportent une fonction (55) de programmation pour mettre en service le circuit logique programmable (45) sur les circuits électroniques de contrôle (12) et mettre hors service le circuit logique programmable (15) pendant le réglage des paramètres.

10.  Système selon la revendication 8 ou 9 dans lequel le circuit logique programmable (45) ou le simulateur (46) et les circuits électroniques de contrôle (12) sont connectés entre eux par l'intermédiaire d'une interface (35) du type lit à clous.

11.  Système selon les revendications 1 à 10 dans lequel les moyens de calcul (50) sont agencés pour commander le générateur de mires (30).

12.  Système selon l'une des revendications 1 à 11 dans lequel le système (1) comporte des moyens (60) de mesure optique reliés aux moyens de calcul (50) pour le réglage du paramètre de scintillement.

13.  Dispositif (10) à écran plat de visualisation d'images comportant un écran (11) et des circuits (12) électroniques de contrôle d'écran lui délivrant des signaux d'entrées lignes X et colonnes Y et dépendant de paramètres de réglage, **caractérisé par le fait que** les circuits électroniques de contrôle comportent un circuit (18) de restitution des paramètres de réglage adapté pour générer des tensions électriques représentatives des valeurs des paramètres de réglage, lesdits paramètres de réglage étant préréglés par un système de préréglage selon l'une des revendications 1 à 12.

14.  Dispositif selon la revendication 13 dans lequel les tensions électriques représentatives des valeurs des paramètres de réglage sont générées à partir de modulations d'impulsions en largeur (PWM).

15.  Dispositif selon la revendication 14 dans lequel les circuits électroniques de contrôle comportent des filtres (161) pour transformer les modulations obtenues en tensions continues.

16.  Dispositif selon la revendication 15 dans lequel les filtres sont du premier ordre.

17.  Dispositif selon l'une des revendications 14 à 16 dans lequel ce sont les rapports cycliques des modulations d'impulsions en largeur qui sont représentatifs des valeurs des paramètres de réglage.

18.  Dispositif selon la revendication 17 dans lequel les rapports cycliques des modulations d'impulsions en largeur sont mémorisés numériquement dans un circuit logique programmable (15).

19.  Dispositif selon la revendication 18 dans lequel les rapports cycliques des modulations d'impulsions en largeur sont mémorisés numériquement par la modification de certains circuits électriques parmi des circuits électriques prédéterminés du circuit logique programmable (15).

20.  Dispositif selon la revendication 19 dans lequel les paramètres sont mémorisés en dur dans le circuit.

21.  Dispositif selon l'une des revendications 19 et 20 dans lequel les modifications des circuits électriques sont réalisées sur les entrées SET ou RESET d'étages de circuits bascules RS (151)

**22.** Dispositif selon l'une des revendications 18 à 21 dans lequel le circuit logique programmable (15) est un EPLD ou un CPLD.

**Patentansprüche**

**1.** System (1) zur Voreinstellung von Parametern zur Einstellung von Videobildern einer Vorrichtung (10) mit Flachbildschirm zur Anzeige von Bildern, die von einem Bildschirm (11) und elektronischen Kontrollschaltungen (12) gebildet ist, die ihm Eingangssignale in Zeilen X und Spalten Y übertragen, und umfassend einen Testbildgenerator (20), ferner umfassend Erfassungsmittel (30), um die Eingangssignale X und Y zu erfassen, Mittel (50) zur Berechnung der Werte der Einstellparameter und Einstellmittel (40), um die Werte der Einstellparameter in den elektronischen Kontrollschaltungen zu speichern, wobei die elektronischen Kontrollschaltungen (12) eine Schaltung (18) zur Wiederherstellung der Einstellparameter umfassen, die dazu vorgesehen ist, die berechneten Werte der Parameter digital zu speichern, **dadurch gekennzeichnet, dass** die Einstellmittel (40) einen Simulator (46) der Wiederherstellungsschaltung (18) umfassen.

**2.** System nach Anspruch 1, bei dem die Berechnungsmittel einen Supervisor (51) umfassen, der dazu vorgesehen ist, die Berechnungen zu wiederholen, solange die Werte der Einstellparameter nicht zufriedenstellend sind.

**3.** System nach einem der Ansprüche 1 und 2, bei dem die Wiederherstellungsschaltung (18) der Parameter eine programmierbare logische Schaltung (15) umfasst, wobei der Simulator (46) mindestens eine programmierbare logische Schaltung (45) umfasst, die die programmierbare logische Schaltung (15) emuliert.

**4.** System nach Anspruch 3, bei dem die programmierbaren logischen Schaltungen (15) und (45) von demselben Typ sind.

**5.** System nach einem der Ansprüche 1 bis 4, bei dem der Simulator (46) nur von dem Emulator (45) gebildet ist.

**6.** System nach einem der Ansprüche 3 und 5, bei dem die Einstellmittel (40) ein Schreibmodul (47) in der programmierbaren logischen Schaltung (15) umfassen, um Änderungen gewisser elektrischer Schaltungen unter vorbestimmten elektrischen Schaltungen der programmierbaren logischen Schaltung (15) durchzuführen, durch die die berechneten Werte der Parameter gespeichert werden.

**7.** System nach einem der Ansprüche 3 und 4 und 6, bei dem die programmierbaren logischen Schaltungen vom Typ EPLD oder CPLD sind.

**8.** System nach einem der Ansprüche 1 bis 7, bei dem die Berechnungsmittel eine Programmierfunktion (55) umfassen, um den Simulator (46) auf den elektronischen Kontrollschaltungen (12) in Betrieb zu setzen, und die Wiederherstellungsschaltung (18) während der Einstellung der Parameter außer Betrieb zu setzen.

**9.** System nach einem der Ansprüche 1 bis 8, bei dem die Berechnungsmittel eine Programmierfunktion (55) umfassen, um die programmierbare logische Schaltung (45) auf den elektronischen Kontrollschaltungen (12) in Betrieb zu setzen, und die programmierbare logische Schaltung (15) während der Einstellung der Parameter außer Betrieb zu setzen.

**10.** System nach Anspruch 8 oder 9, bei dem die programmierbare logische Schaltung (45) oder der Simulator (46) der elektronischen Kontrollschaltungen (12) aneinander unter Vermittlung einer Schnittstelle (35) vom Typ Nagelbett angeschlossen sind.

**11.** System nach den Ansprüchen 1 bis 10, bei dem die Berechnungsmittel (50) dazu vorgesehen sind, den Testbildgenerator (30) zu steuern.

**12.** System nach einem der Ansprüche 1 bis 11, wobei das System (1) optische Messmittel (60) umfasst, die mit den Berechnungsmitteln (50) zur Einstellung des Flimmerparameters verbunden sind.

**13.** Vorrichtung (10) mit Flachbildschirm zur Anzeige von Bildern, umfassend einen Bildschirm (11) und elektronische Schaltungen (12) zur Bildschirmkontrolle, die ihm Eingangssignale in Zeilen X und Spalten Y liefern und von Einstellparametern abhängen, **dadurch gekennzeichnet, dass** die elektronischen Kontrollschaltungen eine Schaltung (18) zur Wiederherstellung der Einstellparameter umfassen, die dazu vorgesehen ist, elektrische Spannungen zu erzeugen, die für die Werte der Einstellparameter repräsentativ sind, wobei die Einstellparameter durch ein System zur Voreinstellung nach einem der Ansprüche 1 bis 12 voreingestellt sind.

**14.** Vorrichtung nach Anspruch 13, bei der die elektrischen Spannungen, die für die Werte der Einstellparameter repräsentativ sind, aus Breitenimpulsmodulationen (PWM) erzeugt werden.

**15.** Vorrichtung nach Anspruch 14, bei der die elektronischen Kontrollschaltungen Filter (161) umfassen, um die erhaltenen Modulationen in Gleichspannungen umzuformen.

**16.** Vorrichtung nach Anspruch 15, bei der die Filter erster Ordnung sind.

**17.** Vorrichtung nach einem der Ansprüche 14 bis 16, bei der es die zyklischen Verhältnisse der Breitenimpulsmodulationen sind, die für die Werte der Einstellparameter repräsentativ sind.

**18.** Vorrichtung nach Anspruch 17, bei der die zyklischen Verhältnisse der Breitenimpulsmodulationen digital in einer programmierbaren logischen Schaltung (15) gespeichert werden.

**19.** Vorrichtung nach Anspruch 18, bei der die zyklischen Verhältnisse der Breitenimpulsmodulationen digital durch die Änderung gewisser elektrischer Schaltungen unter vorbestimmten elektrischen Schaltungen der programmierbaren logischen Schaltung (15) gespeichert werden.

**20.** Vorrichtung nach Anspruch 19, bei der die Parameter auf Festplatte in der Schaltung gespeichert werden.

**21.** Vorrichtung nach einem der Ansprüche 19 und 20, bei der die Änderungen der elektrischen Schaltungen an den Eingängen SET oder RESET von Stufen von Kippschaltungen RS (151) durchgeführt werden.

**22.** Vorrichtung nach einem der Ansprüche 18 bis 21, bei der die programmierbare logische Schaltung (15) eine EPLD oder CPLD ist.


**Claims**

**1.** System (1) for pre-setting adjustment parameters of video images of a flat screen device (10) for viewing images consisting of a screen (11) and electronic control circuits (12) transmitting to it line X and column Y input signals, and comprising a test pattern generator (20), also comprising acquisition means (30) for acquiring the X and Y input signals, calculation means (50) of the adjustment parameter values and storage means (40) for memorising said adjustment parameter values in electronic control circuits, said electronic control circuits (12) comprising a recovery circuit (18) of the adjustment parameters arranged to digitally memorise the calculated parameter values, **characterised in that** the adjustment means (40) comprises a simulator (46) of said recovery circuit (18).

**2.** System according to claim 1 wherein the calculation means comprises a supervisor (51) arranged to repeat the calculations so long as the adjustment parameter values are not satisfactory.

**3.** System according to either one of claims 1 and 2 wherein the parameter recovery circuit (18) comprising a programmable logic circuit (15), the simulator (46) comprises at least one programmable logic circuit (45) emulating the programmable logic circuit (15).

**4.** System according to claim 3 wherein the programmable logic circuits (15) and (45) are of the same type.

**5.** System according to any one of claims 1 to 4 wherein the simulator (46) is comprised of the emulator (45) alone.

**6.** System according to any one of claims 3 and 5 wherein the adjustment means (40) comprises a writing module (47) in the programmable logic circuit (15) to perform modifications of certain electrical circuits among pre-determined electrical circuits of the programmable logic circuit (15) by which said calculated parameter values are memorised.

**7.** System according to any one of claims 3 and 4 and 6 wherein the programmable logic circuits are of the type EPLD or CPLD.

**8.** System according to any one of claims 1 to 7 wherein the calculation means comprises a programming function (55) to put the simulator (46) into service on the electronic control circuits (12) and put the recovery circuit (18) out of service during the adjustment of the parameters.

**9.** System according to any one of claims 1 to 8 wherein the calculation means comprises a programming function (55) for putting the programmable logic circuit (45) into service on the electronic control circuits (12) and put the programmable logic circuit (15) out of service during the adjustment of the parameters.

**10.** System according to claim 8 or 9 wherein the programmable logic circuit (45) or the simulator (46) and the electronic control circuits (12) are connected together by means of an interface (35) of the bed of nails type.

**11.** System according to claims 1 to 10 wherein the calculation means (50) is arranged to control the test pattern generator (30).

**12.** System according to any one of claims 1 to 11 wherein the system (1) comprises optical measuring means (60) linked to the calculation means (50) for adjusting the flicker parameter.

**13.** Flat screen device (10) for viewing images comprising a screen (11) and electronic circuits (12) of screen control delivering to it line X and column Y input signals and depending on adjustment parameters, **characterised in that** the electronic control circuits comprise an adjustment parameter recovery circuit (18) suited to generate electrical voltage representative of the values of the adjustment parameters, said adjustment parameters being pre-set by a pre-setting system according to any one of claims 1 to 12.

14. Device according to claim 13 wherein the electrical voltages representative of the values of the adjustment parameters are generated from pulse width modulations (PWM).

15. Device according to claim 14 wherein the electronic control circuits comprise filters (161) for converting the modulations obtained into DC voltages.

16. Device according to claim 15 wherein the filters are of the first order.

17. Device according to any one of claims 14 to 16 wherein it is the cyclic ratios of the pulse wave modulations that are representative of the values of the adjustment parameters.

18. Device according to claim 17 wherein the cyclic ratios of the pulse wave modulations are digitally memorised in a programmable logic circuit (15).

19. Device according to claim 18 wherein the cyclic ratios of the pulse wave modulations are digitally memorised by the modification of certain electrical circuits among the pre-determined electrical circuits of the programmable logic circuit (15).

20. Device according to claim 19 wherein the parameters are memorised hard in a circuit.

21. Device according to any one of claims 19 and 20 wherein the modifications of the electrical circuits are produced on the stage SET or RESET inputs of RS tipping circuits (151).

22. Device according to any one of claims 18 to 21 wherein the programmable logic circuit (15) is an EPLD or a CPLD.

FIG.1

FIG.2

EP 1 621 025 B1

FIG.3

FIG.4

**EP 1 621 025 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description

- US 5369432 A